# FASCICULE DE BREVET EUROPEEN

(11) **EP 3 013 619 B1**
(45) Date de publication et mention de la délivrance du brevet: **27.02.2019**
(21) Numéro de dépôt: 14719051.6
(22) Date de dépôt: 27.03.2014
(51) Int. Cl.: B60K 6/485, B60K 6/547, B60W 10/08, B60W 10/11, B60W 20/00, B60W 30/19

(54) **PROCEDE D'ASSISTANCE AUX PASSAGES DE RAPPORTS SUR UNE BOITE DE VITESSES**
VERFAHREN ZUR UNTERSTÜTZUNG EINES GANGWECHSELS IN EINEM GETRIEBE
METHOD OF ASSISTING GEAR SHIFTING IN A GEARBOX

(30) Priorité: 24.06.2013 FR 1355973
(43) Date de publication de la demande: 04.05.2016
(73) Titulaire: Renault S.A.S., 92100 Boulogne-Billancourt (FR)
(72) Inventeur: NORIE, Sébastien, F-75013 Paris (FR); LE-ROY, Eric, F-92350 Le Plessis Robinson (FR)
(86) Numéro de dépôt international: PCT/FR2014/050725
(87) Numéro de publication internationale: WO 2014/207330

(56) Documents cités:
- EP-A2- 2 450 216
- DE-A1-102009 045 485
- FR-A1- 2 796 437
- GB-A- 2 386 932
- US-A1- 2010 312 440
- US-A1- 2012 010 796

## Description

La présente invention se rapporte au contrôle des changements de rapports sur une boîte de vitesses. Plus précisément, elle concerne le pilotage du régime de rotation du moteur thermique, pendant les phases de ré-embrayage en cours de passage, à l'aide d'une machine électrique.

Cette invention a pour objet un procédé d'assistance aux passages de rapports sur une boîte de vitesses de groupe motopropulseur à commande manuelle équipé d'un moteur thermique couplé à la boîte de vitesses par un embrayage d'entrée, dont l'ouverture permet d'interrompre la transmission du couple du moteur à la boîte pendant les passages, et d'une machine électrique, dont le couple s'exerce sur un arbre couplé en permanence au vilebrequin du moteur thermique. Selon ce procédé, la machine électrique est utilisée pour contrôler le régime de rotation du moteur thermique en cours de passage, lors de la fermeture de l'embrayage sur le nouveau rapport engagé.

L'invention trouve une application sur tous les véhicules motorisés (automobiles, quadricycles, motocyclettes...) équipés d'un moteur thermique à boite de vitesses manuelle, ou robotisée, et dotés d'une machine électrique coaxiale au vilebrequin, ou, plus généralement, dont le couple s'exerce sur un arbre mécaniquement lié en permanence au vilebrequin du moteur thermique.

Lors d'un passage de rapport avec une boîte de vitesses manuelle reliée au moteur thermique par un embrayage d'entrée, la transmission du couple moteur en direction de la boîte est interrompue par le conducteur en débrayant avant le passage. Une fois le nouveau rapport engagé, il referme l'embrayage en « ré-embrayant ». S'il embraye trop brusquement sur le nouveau rapport et que le régime de rotation du moteur thermique n'est pas synchronisé avec le régime de rotation de l'arbre primaire de la boite de vitesses, la chaîne cinématique subit un à-coup, qui est ressenti désagréablement par les occupants du véhicule. Ces contraintes de dosage d'embrayage et de synchronisation s'imposent, non seulement lors des passages montants, mais aussi lors des passages descendants, que ce soit en montée, si le véhicule perd de la vitesse, et que le conducteur passe un rapport inférieur de boite pour accélérer de nouveau, ou en descente, si le conducteur passe un rapport inférieur pour bénéficier du frein moteur lorsque le véhicule gagne de la vitesse.

Sur un véhicule équipé seulement d'un moteur thermique couplé à une boîte de vitesses manuelle par un embrayage d'entrée, le contrôle du régime de rotation du moteur thermique pendant la phase de ré-embrayage, relève du seul conducteur. Dans le cas d'un véhicule hybride, disposant d'une deuxième source d'énergie motrice, telle qu'une machine électrique, il est possible d'utiliser celle-ci pour faciliter la synchronisation du moteur thermique sur le nouveau rapport.

Par la publication FR 2 796 437, on connaît un système de contrôle des changements de rapports montants pour véhicule automobile à motorisation principale thermique. Dans l'architecture décrite, la machine électrique est placée entre l'embrayage d'entrée et la boîte de vitesses. La détection d'un rapport montant est effectuée par l'observation d'un capteur de régime de rotation de l'arbre primaire de boîte. Au cours d'un passage montant, la machine électrique est commandée en régulation de couple selon un fonctionnement en générateur de courant pour ralentir le moteur thermique principal sur une cible de régime, en fonction du rapport qui va être engagé et de la vitesse du véhicule. La méthode proposée n'est donc pas transposable au cas des rapports descendants et elle n'autorise aucune adaptation de la cible de régime de rotation aux conditions de conduite du véhicule.

La publication DE 10 2009 045 485 décrit un procédé de pilotage de changement de rapports sur un groupe motopropulseur comportant une machine électrique couplée au vilebrequin du moteur thermique avant l'embrayage d'entrée sur la boîte de vitesses. Dans ce document, la machine électrique est pilotée pendant le passage pour synchroniser le moteur thermique avec la transmission selon l'abrégé en fonction de la direction du rapport engagé.

La publication US 2012/0010796 décrit une méthode et un système d'amélioration de la qualité des passages de vitesses. La méthode prévoit un passage montant ou descendant d'une transmission manuelle, sur la base de l'accélération du véhicule, et de la position des pédales d'embrayage et d'accélération. La prédiction du passage et du rapport suivant permet d'estimer le régime du moteur sur celui-ci et de doser en conséquence le fuel injecté.

La présente invention vise à utiliser une machine électrique couplée en permanence au vilebrequin du moteur thermique pour contrôler le régime de rotation de ce dernier pendant les changements de rapports, sur une boîte de vitesses manuelle, ou robotisée, notamment lors des phases de ré-embrayage en accélération et en décélération, sur une route plane ou en pente. Le contrôle s'effectue en fonction du futur rapport de boîte de vitesses.

Dans ce but, elle propose que
- si avant le passage, la vitesse du véhicule croit et le pourcentage d'enfoncement de la pédale d'accélérateur est strictement supérieur à zéro, le passage prédit est un passage montant du rapport N au rapport N+1, et la machine électrique est pilotée pour diminuer le régime de rotation du moteur thermique jusqu'au régime ciblé, alors que
- si l'enfoncement de la pédale est nul, le passage prédit est un rapport descendant du rapport N au rapport N-1, et la machine électrique est pilotée pour augmenter le régime de rotation du moteur thermique jusqu'au régime cible.

Dans le cas d'une boîte de vitesses manuelle, dans le cas d'une boîte de vitesses manuelle, le régime ciblé est fonction du nouveau rapport prévu par calcul à partir d'une analyse des conditions de roulage et du comportement du conducteur.

Dans le cas d'une boîte de vitesses robotisée, rapport le régime ciblé est fonction du rapport déterminé par le calculateur de la boîte.

La méthode proposée repose sur l'utilisation d'une machine électrique liée au vilebrequin du moteur thermique pour contrôler le régime de rotation de ce dernier lors des phases de ré-embrayage en accélération et en décélération. Elle exploite les informations suivantes : vitesse de déplacement du véhicule (ou régime de rotation des arbres de la boite de vitesses), régime de rotation du moteur thermique, position de la pédale d'accélérateur, position de la pédale de frein, position de la pédale d'embrayage, et rapport courant de la boîte de vitesses. Ces données sont utilisées pour adapter la consigne de pilotage de la machine électrique en fonction de la situation. Dans la description qui suit, on entend par ces « informations », la variable brute, aussi bien que ses dérivées et ses primitives multiples.

D'autres caractéristiques et avantages de l'invention ressortiront clairement à la lecture de la description d'un mode de réalisation non limitatif de celle-ci, en se référant aux dessins annexés, sur lesquels :
- les figures 1A, 1B, 1C montrent trois architectures possibles avec une machine électrique liée au vilebrequin du moteur thermique,
- la figure 2 illustre la synchronisation du régime du moteur thermique pendant un changement de rapport montant,
- la figure 3 illustre la synchronisation du régime du moteur thermique pendant un changement de rapport descendant, et
- la figure 4 représente un exemple de table de vérité, permettant d'écarter certains passages de rapports en fonction de la vitesse du véhicule.

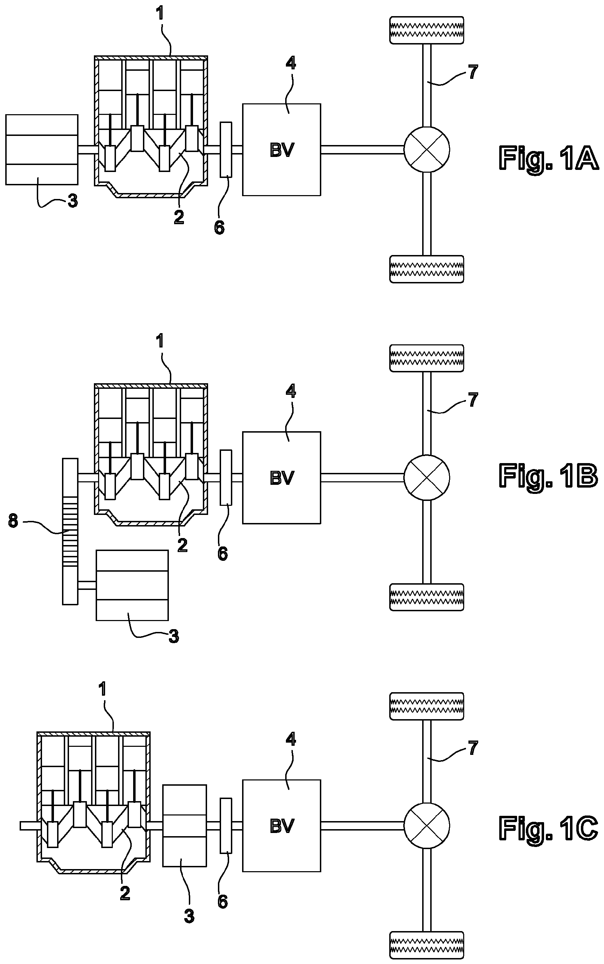

Sur la figure 1A, on a représenté schématiquement une architecture hybride composée d'un moteur thermique 1 dont le vilebrequin 2 est relié mécaniquement par une première extrémité à une machine électrique 3 et par une deuxième extrémité à une boîte de vitesses 4 par l'intermédiaire d'un embrayage d'entrée 6. La boîte de vitesses transmet le couple des deux sources motrices au même essieu 7 du véhicule. Sur la figure 1B, la disposition des organes est analogue, la machine électrique 3 étant cette fois déportée latéralement par rapport au moteur thermique 1, avec une transmission du mouvement par une chaîne ou une courroie 8, en direction de celle-ci. Enfin, sur la figure 1C, la machine électrique 3 est placée entre le moteur thermique 1 et l'embrayage d'entrée 6.

Comme indiqué ci-dessus, l'invention utilise une machine électrique liée au vilebrequin du moteur thermique et les informations de vitesse du véhicule (ou régime de rotation des arbres de la boite de vitesses), de régime de rotation du moteur thermique, de position de la pédale d'accélérateur, de position de la pédale de frein, de position pédale d'embrayage et de rapport courant de la boite de vitesses, pour adapter la consigne de pilotage de la machine électrique en fonction d'une stratégie identifiant différentes situations.

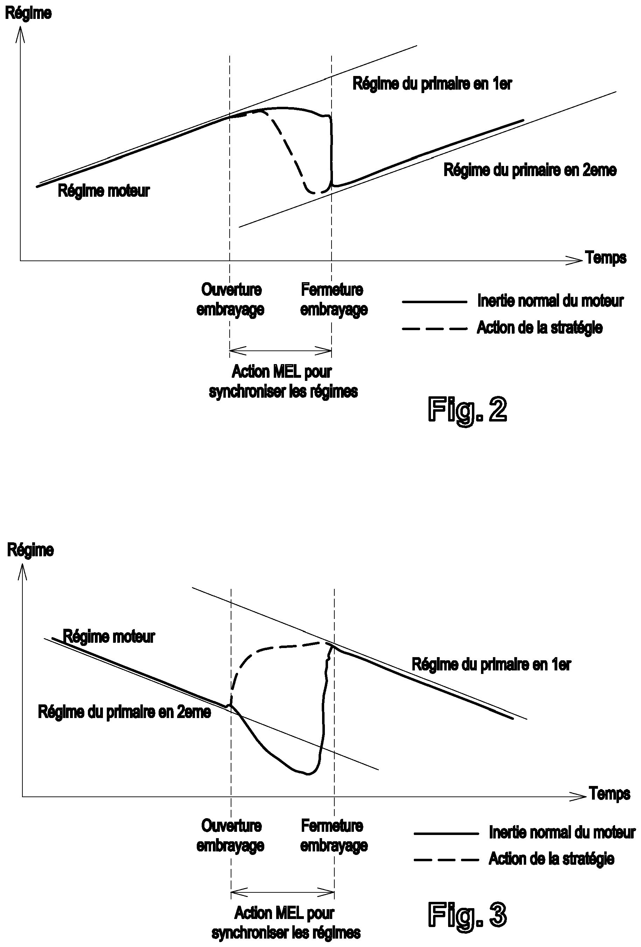

Lors d'un passage montant du rapport N à un N+1, en phase d'accélération, la machine électrique réagit à la prédiction (dans le cas d'une boite de vitesses manuelle) ou à la consigne (dans le cas d'une boite de vitesses robotisée) d'un prochain rapport de boite montant en faisant descendre le moteur thermique en régime, jusqu'à une vitesse de rotation dépendant du nouveau rapport engagé et de la vitesse du véhicule (ou régime d'arbres de la boite de vitesses). La figure 2 met en évidence l'impact de cette mesure sur la variation du régime, dans le cas d'un passage de première en deuxième : grâce à l'action de la machine électrique (MEL), le régime de rotation du moteur thermique rejoint le régime de deuxième avant la fermeture de l'embrayage, alors qu'il chute brutalement à ce stade sans cette synchronisation préalable.

Lors d'un passage descendant en phase de décélération, avec ou sans pied sur la pédale de frein, la machine électrique réagit à la prédiction (dans le cas d'une boite de vitesses manuelle) ou à la consigne (dans le cas d'une boite de vitesses robotisée) d'un prochain rapport de boite descendant de rapport de N à N-1 en faisant monter le régime du moteur thermique à une vitesse de rotation dépendant du nouveau rapport engagé et de la vitesse du véhicule, ou celle d'un arbre de la boîte de vitesses. Sur la figure 3, qui met en évidence l'effet de cette réaction sur le régime du moteur thermique dans le cas d'un passage de deuxième en première, on voit que le régime du moteur est synchronisé avec celui du primaire, pendant la période d'ouverture de l'embrayage.

Le régime cible du moteur sur le rapport identifié comme allant être engagé lors de la manoeuvre, peut être déterminé de la façon suivante. Dans le cas d'une boîte de vitesses manuelle, le nouveau rapport est prédit par calcul, à partir d'une analyse des conditions de roulage, et du comportement du conducteur. Dans le cas d'une boîte de vitesses robotisée, le rapport engagé est connu du calculateur de la boite, (puisqu'il est déterminé par le contrôleur de l'automate de commande de la boîte de vitesses). Dans les deux cas, le régime cible de rotation du moteur thermique se calcule par la formule suivante : Régime cible = vitesse instantanée du véhicule x 1000 / V1000 du rapport cible (La V1000 étant une grandeur représentative de la démultiplication de la boîte de vitesses, reliant la vitesse du véhicule au régime de rotation du moteur thermique). A noter que, pour les passages montants, il peut être préférable de viser un régime de rotation du moteur thermique légèrement supérieur au régime cible calculé.

Conformément à l'invention, le régime du moteur thermique est piloté pour atteindre le régime ciblé en fonction du type de passage réalisé. Dans le cas d'une boîte de vitesses manuelle, il est prédit en fonction de la variation de la vitesse du véhicule avant le passage, et du pourcentage d'enfoncement de la pédale d'accélérateur avant le passage. Cette méthode permet d'assurer une assistance aux passages de rapports sur une boîte de vitesse de groupe motopropulseur équipé d'un moteur thermique couplé à la boîte de vitesses par un embrayage d'entrée, dont l'ouverture permet d'interrompre la transmission du couple du moteur à la boîte pendant les passages, et d'une machine électrique d'assistance dont le couple s'exerce sur un arbre couplé en permanence au vilebrequin du moteur thermique. Cette assistance est mise en oeuvre pour contrôler le régime de rotation du moteur thermique avant la fermeture de l'embrayage sur le nouveau rapport engagé de la manière suivante.

Si en phase d'accélération, la vitesse du véhicule croit, et le pourcentage d'enfoncement de la pédale d'accélérateur est strictement supérieur à zéro avant le passage, alors le passage réalisé est analysé comme un passage montant du rapport N au rapport N+1. La machine électrique 3 est pilotée en conséquence pour diminuer le régime de rotation du moteur thermique 1, jusqu'au régime ciblé sur le rapport N+1.

Si en phase de décélération, la vitesse du véhicule décroit, ou le conducteur a le pied sur la pédale de frein avant le passage, et le pourcentage d'enfoncement de la pédale d'accélérateur est inférieur à un seuil, alors le passage réalisé est analysé comme un passage descendant du rapport N au rapport N-1, et la machine électrique 3 est pilotée pour augmenter le régime de rotation du moteur thermique 1 jusqu'au régime ciblé sur le rapport N-1.

Lorsque le véhicule décélère en montée avant le passage, et que le pourcentage d'enfoncement de la pédale d'accélérateur est strictement supérieur à un seuil, alors le passage est analysé comme un passage descendant du rapport N au rapport N-1. La machine électrique est pilotée pour augmenter le régime de rotation du moteur thermique jusqu'au régime ciblé sur le rapport N-1.

Lorsque le véhicule accélère en descente avant le passage, et que le pourcentage d'enfoncement de la pédale d'accélérateur est nul, alors le passage est analysé comme un rapport descendant du rapport N au rapport N-1. La machine électrique est pilotée pour augmenter le régime de rotation du moteur thermique jusqu'au régime ciblé sur le rapport N-1.

Lorsqu'un passage est réalisé pour gagner en accélération, la vitesse du véhicule est généralement constante, ou bien le véhicule est en légère accélération juste avant le passage. Si alors, le pourcentage d'enfoncement de la pédale d'accélérateur est de 100%, le passage réalisé est analysé comme un passage descendant du rapport N sur le rapport N-1. La machine électrique 3 est alors pilotée pour augmenter le régime de rotation du moteur thermique 1, jusqu'au régime ciblé sur le rapport N-1.

Enfin, sur le plat, lorsque la vitesse du véhicule est pratiquement constante (par exemple avec une variation de + ou - 5%), l'hypothèse peut être faite que le rapport engagé est par défaut un passage montant, notamment dans le cadre d'une conduite « économique ». Ce choix est peu pénalisant en termes de confort s'il s'avère finalement que le passage est descendant, compte-tenu de la faible variation de régime moteur qui est en jeu.

Les situations décrites ci-dessus sont toutes prises en compte dans la stratégie suivante. Si avant le passage de rapport, la vitesse du véhicule croit, et le pourcentage d'enfoncement de la pédale d'accélérateur est strictement supérieur à zéro, le passage prédit est un passage montant du rapport N au rapport N+1, et la machine électrique est pilotée pour diminuer le régime de rotation du moteur thermique, alors que si l'enfoncement de la pédale est nul, le passage de rapport prédit est un passage descendant du rapport N au rapport N-1, et la machine électrique est pilotée pour augmenter le régime de rotation du moteur thermique.

Si, avant le passage de rapport, la vitesse du véhicule décroit ou est constante, le passage prédit est un passage descendant du rapport N sur le rapport N-1, et la machine électrique est pilotée pour augmenter le régime du moteur.

Si, avant le passage de rapport, la vitesse décroit ou le pied du conducteur est en appui sur la pédale de frein, et le pourcentage d'enfoncement de la pédale d'accélérateur est inférieur à un seuil, le passage prédit est un passage descendant du rapport N sur le rapport N-1. La machine électrique est alors pilotée pour augmenter le régime de rotation du moteur thermique.

Enfin, si avant le passage de rapport, la vitesse du véhicule est constante ou en légère augmentation, et que le régime décroit ou le pied du conducteur est en appui sur la pédale de frein, et que le pourcentage d'enfoncement de la pédale d'accélérateur est égal à 100%, le passage prédit est aussi un passage descendant du rapport N sur le rapport N-1, et la machine électrique est pilotée pour augmenter le régime de rotation du moteur thermique.

Dans le cas d'une boite de vitesses robotisée, le nouveau rapport est déterminé par le contrôleur de l'automate de commande de la boite de vitesses (son calculateur). Le rapport engagé étant donc connu de celui-ci, il est inutile de le prédire. Cependant le pilotage de la machine électrique s'effectue de manière analogue. Si le passage est montant, la machine électrique est pilotée pour diminuer le régime de rotation du moteur thermique jusqu'au régime ciblé, tandis que, si le passage est descendant, la machine électrique est pilotée pour augmenter le régime de rotation du moteur thermique jusqu'au régime ciblé.

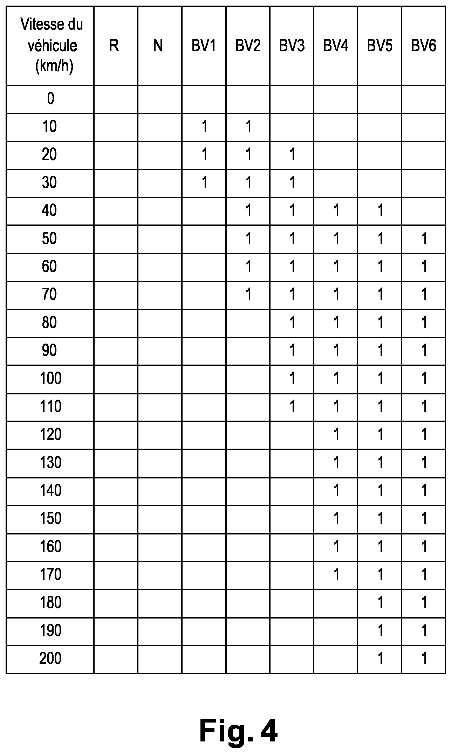

Dans le cadre de l'invention, l'assistance au passage de rapports peut être écartée lors de l'engagement de certains rapports en fonction de la vitesse du véhicule. Sur la figure 4, apparaît à titre d'illustration non limitative de cette disposition, une table de passages de vitesses, établie pour six rapports de marche avant (BV1 à BV6) sur un véhicule pouvant rouler de 0 à 200km/h. Cette table permet d'introduire des conditions limitatives dans l'application du procédé, en fonction de la vitesse du véhicule. La valeur 1, est affectée à différentes vitesses du véhicule aux rapports dont l'engagement bénéficie de l'assistance. En descente, l'assistance peut par exemple être écartée à certaines vitesses, si le véhicule accélère et que le conducteur souhaite passer un rapport supérieur pour diminuer le frein moteur et le bruit du moteur.

Les avantages de l'invention sont nombreux. En premier lieu, la machine électrique couplée en permanence au vilebrequin, permet de contrôler rapidement et précisément le régime de rotation du moteur thermique pour le positionner au régime souhaité pour le ré-embrayage. La machine électrique peut être alimentée par une batterie, un super-condensateur, ou toutes autres sources d'énergie électrique suffisante pour procurer la puissance nécessaire à la montée en régime du moteur thermique.

Son pilotage dans les conditions prévues améliore l'agrément de passage de rapport en accélération ou en décélération, car il réduit les à-coups ressentis lors des phases de ré-embrayage à la fin des changements de rapport. Cette amélioration corrige les désagréments de passages de rapports réalisés trop rapidement, ou trop lentement.

L'invention favorise également le «brio» en accélération (lors d'un passage de rapport supérieur) en donnant une impression de fluidité dans le changement des rapports car elle introduit plus de continuité dans l'accélération.

Par ailleurs, l'intervention de la machine électrique lors des passages de rapports est rapide et absolument silencieuse. Elle permet à terme, d'augmenter la durée de vie de l'embrayage en réduisant son glissement lors des passages. De même, elle contribue à la longévité de la boîte de vitesses, en réduisant les efforts subis par les synchroniseurs, lors de chaque passage.

## Revendications

1. Procédé d'assistance aux passages de rapports sur une boîte de vitesses de groupe motopropulseur équipé d'un moteur thermique (1) couplé à une boîte de vitesses par un embrayage d'entrée (6) dont l'ouverture permet d'interrompre la transmission du couple du moteur (1) à la boîte (4) pendant les passages, et d'une machine électrique d'assistance (3) dont le couple s'exerce sur un arbre couplé en permanence au vilebrequin (2) du moteur thermique, selon lequel la machine électrique est pilotée avant la fermeture de l'embrayage sur le nouveau rapport engagé pour que le régime du moteur thermique (1) atteigne un régime ciblé en fonction d'une prédiction du rapport engagé, établie à partir de la variation de la vitesse du véhicule et du pourcentage d'enfoncement de la pédale d'accélérateur avant le passage, **caractérisé en ce que**
- si avant le passage, la vitesse du véhicule croit et le pourcentage d'enfoncement de la pédale d'accélérateur est strictement supérieur à zéro, le passage prédit est un passage montant du rapport N au rapport N+1, et la machine électrique (3) est pilotée pour diminuer le régime de rotation du moteur thermique (1) jusqu'au régime ciblé, alors que
- si l'enfoncement de la pédale est nul, le passage prédit est un rapport descendant du rapport N au rapport N-1, et la machine électrique (3) est pilotée pour augmenter le régime de rotation du moteur thermique (1) jusqu'au régime cible.

2. Procédé d'assistance selon la revendication 1, **caractérisé en ce que** dans le cas d'une boîte de vitesses manuelle, le régime ciblé est fonction du nouveau rapport prévu par calcul à partir d'une analyse des conditions de roulage et du comportement du conducteur.

3. Procédé d'assistance selon la revendication 1, **caractérisé en ce que** dans le cas d'une boîte de vitesses robotisée, rapport le régime ciblé est fonction du rapport déterminé par le calculateur de la boîte.

4. Procédé d'assistance selon la revendication 1, 2 ou 3, **caractérisé en ce que** si, avant le passage, la vitesse du véhicule décroit ou est constante, le passage prédit est un passage descendant du rapport N sur le rapport N-1 et la machine électrique (3) est pilotée pour augmenter le régime de rotation du moteur thermique jusqu'au régime cible.

5. Procédé d'assistance selon la revendication 1, 2 ou 3, **caractérisé en ce que** si, avant le passage, la vitesse décroit ou le pied du conducteur est en appui sur la pédale de frein, et le pourcentage d'enfoncement de la pédale d'accélérateur est inférieur à un seuil, le passage prédit est un passage descendant du rapport N sur le rapport N-1 et la machine électrique est alors pilotée pour augmenter le régime de rotation du moteur thermique jusqu'au régime cible.

6. Procédé d'assistance selon la revendication 3, **caractérisé en ce que** si le passage engagé est un passage montant, la machine électrique (3) est pilotée pour diminuer le régime de rotation du moteur thermique (1) jusqu'au régime cible.

7. Procédé d'assistance selon la revendication 3, **caractérisé en ce que** si le passage engagé est un passage descendant, la machine électrique est pilotée pour augmenter le régime de rotation du moteur thermique jusqu'au régime cible.

8. Procédé d'assistance selon l'une des revendications précédentes, **caractérisé en ce que** l'assistance peut être écartée pour l'engagement de certains rapports, en fonction de la vitesse du véhicule.

## Patentansprüche

1. Verfahren zur Unterstützung der Gangwechsel in einem Getriebe eines Antriebsstranges, der ausgestattet ist mit einem Verbrennungsmotor (1), der mit einem Getriebe durch eine Eingangskupplung (6) gekoppelt ist, deren Öffnung es ermöglicht, die Übertragung des Drehmoments des Motors (1) auf das Getriebe (4) während der Gangwechsel zu unterbrechen, und mit einer elektrischen Hilfsmaschine (3), deren Drehmoment auf eine ständig mit der Kurbelwelle (2) des Verbrennungsmotors gekoppelte Welle ausgeübt wird, wobei die elektrische Maschine vor dem Schließen der Kupplung bei dem eingelegten neuen Gang so vorgesteuert wird, dass die Drehzahl des Verbrennungsmotors (1) eine Zieldrehzahl in Abhängigkeit von einer Vorhersage des eingelegten Ganges erreicht, die ausgehend von der Änderung der Geschwindigkeit des Fahrzeugs und vom Grad des Niedertretens des Gaspedals vor dem Gangwechsel getroffen wird, **dadurch gekennzeichnet, dass**,
- falls vor dem Gangwechsel die Geschwindigkeit des Fahrzeugs zunimmt und der Grad des Niedertretens des Gaspedals streng größer als null ist, der vorhergesagte Gangwechsel ein Hochschalten vom Gang N in den Gang N+1 ist und die elektrische Maschine (3) so vorgesteuert wird, dass die Drehzahl des Verbrennungsmotors (1) auf die Zieldrehzahl verringert wird, wohingegen,
- falls das Niedertreten des Pedals null ist, der vorhergesagte Gangwechsel ein Herunterschalten vom Gang N in den Gang N-1 ist, und die elektrische Maschine (3) so vorgesteuert wird, dass die Drehzahl des Verbrennungsmotors (1) auf die Zieldrehzahl erhöht wird.

2. Verfahren zur Unterstützung nach Anspruch 1, **dadurch gekennzeichnet, dass** im Falle eines Handschaltgetriebes die Zieldrehzahl von dem neuen Gang abhängig ist, der durch Berechnung aus einer Analyse der Fahrbedingungen und des Verhaltens des Fahrers vorherbestimmt wird.

3. Verfahren zur Unterstützung nach Anspruch 1, **dadurch gekennzeichnet, dass** im Falle eines automatisierten Schaltgetriebes die Zieldrehzahl von dem Gang abhängig ist, der vom Rechner des Getriebes bestimmt wird.

4. Verfahren zur Unterstützung nach Anspruch 1, 2 oder 3, **dadurch gekennzeichnet, dass**, falls vor dem Gangwechsel die Geschwindigkeit des Fahrzeugs abnimmt oder konstant ist, der vorhergesagte Gangwechsel ein Herunterschalten vom Gang N in den Gang N-1 ist und die elektrische Maschine (3) so vorgesteuert wird, dass die Drehzahl des Verbrennungsmotors auf die Zieldrehzahl erhöht wird.

5. Verfahren zur Unterstützung nach Anspruch 1, 2 oder 3, **dadurch gekennzeichnet, dass**, falls vor dem Gangwechsel die Geschwindigkeit abnimmt oder der Fuß des Fahrers sich auf dem Bremspedal befindet, und der Grad des Niedertretens des Gaspedals kleiner als ein Schwellenwert ist, der vorhergesagte Gangwechsel ein Herunterschalten vom Gang N in den Gang N-1 ist und die elektrische Maschine dann so vorgesteuert wird, dass die Drehzahl des Verbrennungsmotors auf die Zieldrehzahl erhöht wird.

6. Verfahren zur Unterstützung nach Anspruch 3, **dadurch gekennzeichnet, dass**, falls der durchgeführte Gangwechsel ein Hochschalten ist, die elektrische Maschine (3) so vorgesteuert wird, dass die Drehzahl des Verbrennungsmotors (1) auf die Zieldrehzahl verringert wird.

7. Verfahren zur Unterstützung nach Anspruch 3, **dadurch gekennzeichnet, dass**, falls der durchgeführte Gangwechsel ein Herunterschalten ist, die elektrische Maschine so vorgesteuert wird, dass die Drehzahl des Verbrennungsmotors auf die Zieldrehzahl erhöht wird.

8. Verfahren zur Unterstützung nach einem der vorhergehenden Ansprüche, **dadurch gekennzeichnet, dass** die Unterstützung für das Einlegen bestimmter Gänge, in Abhängigkeit von der Geschwindigkeit des Fahrzeugs, aufgehoben werden kann.

## Claims

1. Method for assisting gear shifts in a gearbox of a power train fitted with a combustion engine (1) coupled to a gearbox by an input clutch (6) that can be opened to interrupt the transmission of torque from the engine (1) to the gearbox (4) during gear shifts, and an auxiliary electric machine (3) exerting torque on a shaft permanently coupled to the crankshaft (2) of the combustion engine, in which the electric machine is controlled before the clutch is closed on the new gear ratio engaged so that the speed of the combustion engine (1) reaches a target speed as a function of a prediction of the gear ratio engaged, established on the basis of the variation in the speed of the vehicle and of the percentage of depression of the accelerator pedal before the gear shift, **characterized in that**
- if, before the gear shift, the speed of the vehicle increases and the percentage of depression of the accelerator pedal is strictly greater than zero, the predicted gear shift is an upshift from the gear ratio N to the gear ratio N+1, and the electric machine (3) is instructed to reduce the rotational speed of the combustion engine (1) to the target speed, while
- if the depression of the pedal is zero, the predicted gear shift is a downshift from gear ratio N to gear ratio N-1, and the electric machine (3) is instructed to increase the rotational speed of the combustion engine (1) to the target speed.

2. Assistance method according to Claim 1, **characterized in that**, in a manual gearbox, the target speed is a function of the new gear ratio anticipated by calculation from an analysis of the driving conditions and the behaviour of the driver.

3. Assistance method according to Claim 1, **characterized in that**, in a semi-automatic gearbox, ratio the target speed is a function of the gear ratio determined by the processor of the gearbox.

4. Assistance method according to Claim 1, 2 or 3 **characterized in that** if, before the gear shift, the speed of the vehicle decreases or is constant, the predicted gear shift is a downward gear shift from gear ratio N to gear ratio N-1 and the electric machine (3) is instructed to increase the rotational speed of the combustion engine to the target speed.

5. Assistance method according to Claim 1, 2 or 3 **characterized in that** if, before the gear shift, the vehicle speed decreases or the driver's foot is pressing the brake pedal, and the percentage of depression of the accelerator pedal is less than a threshold, the predicted gear shift is a downward gear shift from gear ratio N to gear ratio N-1 and the electric machine is then instructed to increase the rotational speed of the combustion engine to the target speed.

6. Assistance method according to Claim 3, **characterized in that**, if the gear shift is an upward gear shift, the electric machine (3) is instructed to reduce the rotational speed of the combustion engine (1) to the target speed.

7. Assistance method according to Claim 3, **characterized in that**, if the gear shift is a downward gear shift, the electric machine is instructed to increase the rotational speed of the combustion engine to the target speed.

8. Assistance method according to one of the preceding claims, **characterized in that** the assistance need not be used when engaging all gear ratios, depending on the speed of the vehicle.
